# EUROPEAN PATENT APPLICATION

(11) **EP 2 630 896 A1**
(43) Date of publication of application: **28.08.2013**
(21) Application number: 12156946.1
(22) Date of filing: 24.02.2012
(51) Int. Cl.: A47J 27/00, A47J 27/14, A47J 43/07

(54) **Electrical cooking pot**

(71) Applicant: Eksen Makine Sanayi ve Ticaret A.S., 41480 Kocaeli (TR)
(72) Inventor: Tahincioglu, Besim, 41480 Kocaeli (TR)
(74) Representative: Sevinç, Erkan

(57) **Abstract**

The present invention proposes a domestic appliance and specifically an electrical cooking pot in which food cooking process is overseen by an electronic control unit such that parameters such as cooking duration and temperature are adjustable. Said electronic control unit according to the present invention may apply temperature control by means of a NTC element. The present invention further features an adaptor associated with a propeller system for agitating food items being cooked. Said propeller system can be controlled by said electronic control unit to allow agitation speed in respect of different food items. This is achieved by setting s motor's speed in said propeller system accordingly.

## Description

### Technical Field of the Invention

The present invention relates to an electrical cooking appliance in which food items can be cooked as in traditional non-electrical cooking pots.

### Background of the Invention

Cooking pots are typically electrified through electrical resistances and are widely used in professional applications if not in end-user kitchens.

An electrical cooking pot is typically advantageous in providing strict control over a set of parameters such as cooking temperature and duration and therefore especially preferred by professional cookers in the country of the applicant. An enormous sale potential yet exist considering home users as food cooking is still heavy based on gas burners.

To this end, a simple and effective electrical appliance with improved parameter control can be beneficial to end users in terms of effective time management and standardized taste.

The electrical pot of the invention also features advances functions allowing homogenous distribution of food items in the pot during cooking, therefore contributing to the overall taste of the cooked food. This is also beneficial to working people having limited time to invest in preparing food with intricate recipes but still prefers homemade food.

### Objects of the Invention

Primary object of the present invention is to provide an electrical pot having advanced temperature and duration control.

Another object of the present invention is to provide an electrical pot providing homogenous cooking.

### Summary of the Invention

The present invention proposes a domestic appliance and specifically an electrical cooking pot in which food cooking process is overseen by an electronic control unit such that parameters such as cooking duration and temperature are adjustable. Said electronic control unit according to the present invention may apply temperature control by means of an NTC element. The present invention further features an adaptor associated with a propeller system for agitating food items being cooked. Said propeller system can be controlled by said electronic control unit to allow agitation speed in respect of different food items. This is achieved by setting s motor's speed in said propeller system accordingly.

### Brief Description of the Figures

The figures whose brief explanation are herewith provided are solely intended for providing a better understanding of the present invention and is as such not intended to define the scope of protection or the context in which said scope is interpreted in the absence of the description.

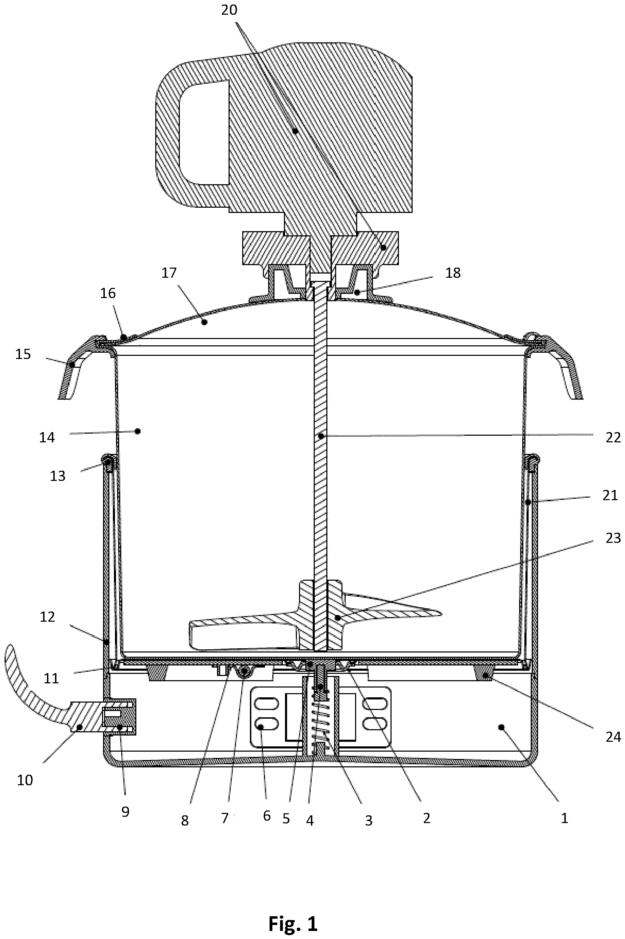

Fig. 1 demonstrates a general cross-sectional view of the household appliance according to the present invention.

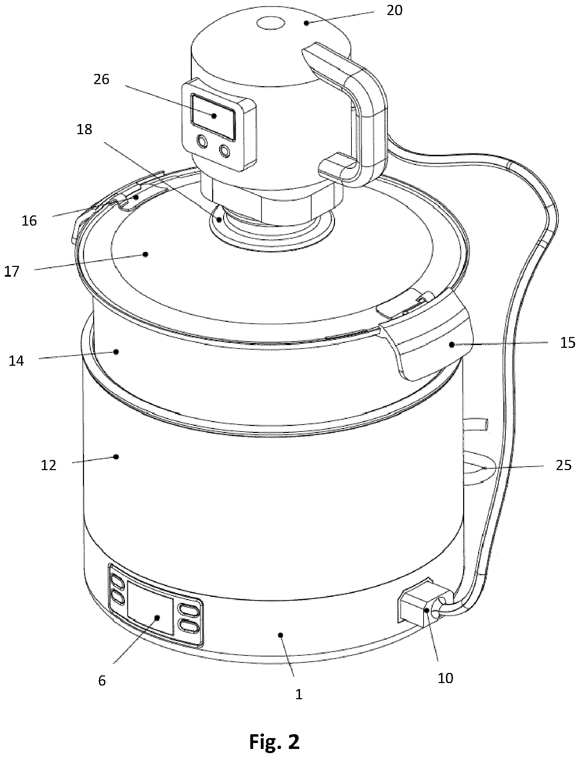

Fig. 2 demonstrates a general perspective view of the household appliance according to the present invention.
Fig. 3 demonstrates another general perspective view of another embodiment of the household appliance having no electronic control unit according to the present invention.
Fig. 4 demonstrates another general cross-sectional view of another embodiment of the household appliance having no electronic control unit according to the present invention.

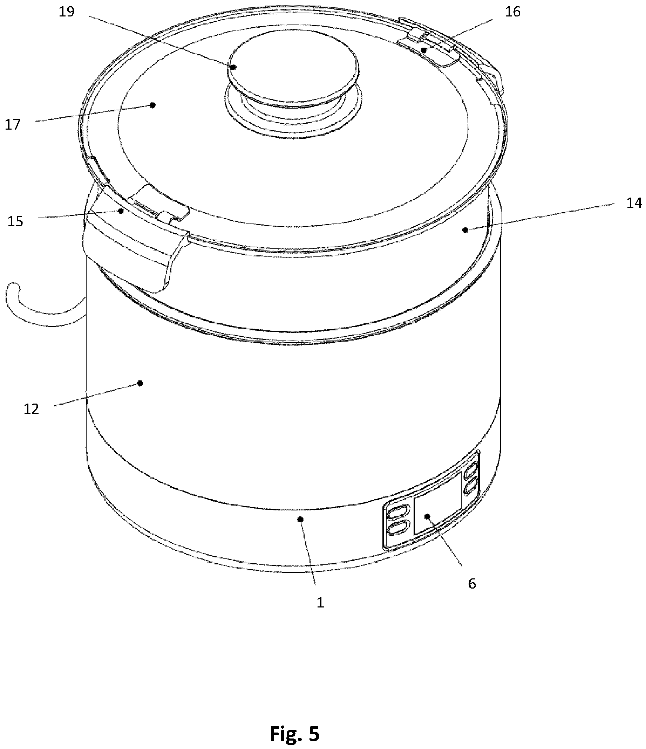

Fig. 5 demonstrates another general perspective view of the household appliance according to the present invention.

### Detailed Description of the Invention

Referring now to the figures outlined above, the present invention proposes an electrical household appliance for cooking food, namely an electrical cooking pot (14) with preferably a stainless steel body (21). Food cooking process is overseen by an electronic control unit (6) with a display unit, by which parameters such as cooking duration and temperature are conveniently set.

Said electronic control unit (6) according to the present invention applies temperature control by means of an NTC element (4) as detailed below.

The present invention further features a propeller system (20, 22, 23) for agitating food items being cooked. Said propeller system (20, 22, 23) can be controlled by said electronic control unit (6) to allow agitation speed in respect of different food items. This is achieved by setting a propeller motor's (20) speed in said propeller system (20, 22, 23) accordingly.

The appliance of the invention is embodied with a skirt part (1), a polymeric body extension (12) and a cooking pot part (14). Said cooking pot part (14) is placed in said polymeric body part (12) having an upper rim with a sealing member (13). Said cooking pot part (14) has handles (15) and lid locks (16) for keeping the cooking pot's lid (17) stationary during homogenization process as detailed below. Said lid (17) has a handle (19) with a body extension (18).

A temperature sensor (4, 29) secured in an aluminum housing (5) and pressed against the base of said cooking pot part (14) by means of a spring element (3) is encircled by a silicone sealing element (2) in order for insulating the same from the heat generated by electrical resistances (24, 30).

Said temperature sensor (4, 29) of the invention may either be a mechanical one such as a bimetal element (29) or an electrical element (4, NTC element) controllable by said electronic control unit (6). In the case a bimetal thermostat (29) is used as a temperature sensor, heat energy transferred to the cooking pot part (14) can be adjusted to a lower power level upon opening of said bimetal thermostat (29) a higher power dissipation resistance (24) circuit and closing a lower power dissipation resistance (30) circuit in respect of said higher power dissipation resistance (24). The amount of active power dissipated on said lower power dissipation resistance (30) can be set by users among a set of default levels. Said resistances (24, 26) are disposed immediately below a sealing member (11).

To this end, either under mechanical control or by an electronic control unit (6), the cooking pot part (14) will be fully energized upon operating of the electrical appliance and then will be switched to a user-defined reduced power mode either by said mechanical thermostat (29) or by said control unit (6). In case amount of liquid present in the cooking pot is fully consumed and overheating of the vessel base occurs, said electronic unit (6) powers off said electrical resistances (26, 30). Reduced power mode is set to be effective at a certain temperature around boiling temperature. Cooking duration may also either be set manually by means of said control unit (6) or by means of a mechanical timer according to a second embodiment of the present invention in which mechanical thermostat (29) control is applied.

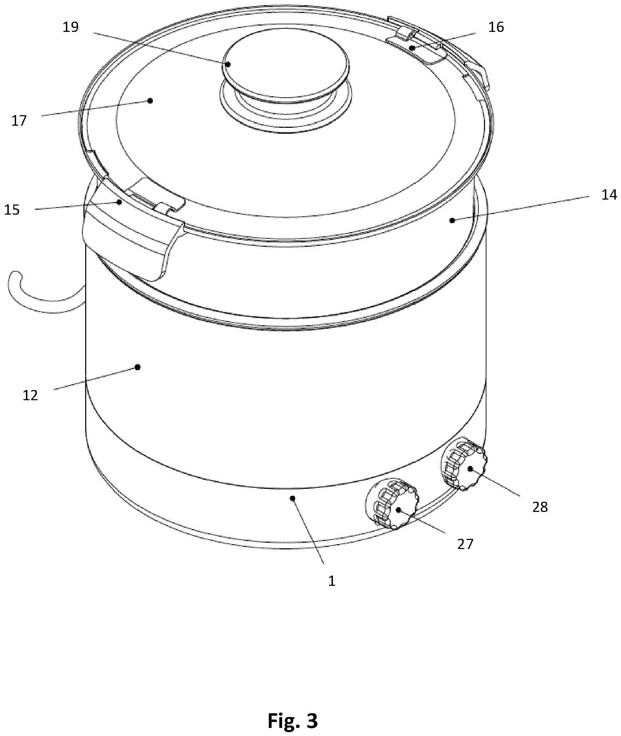

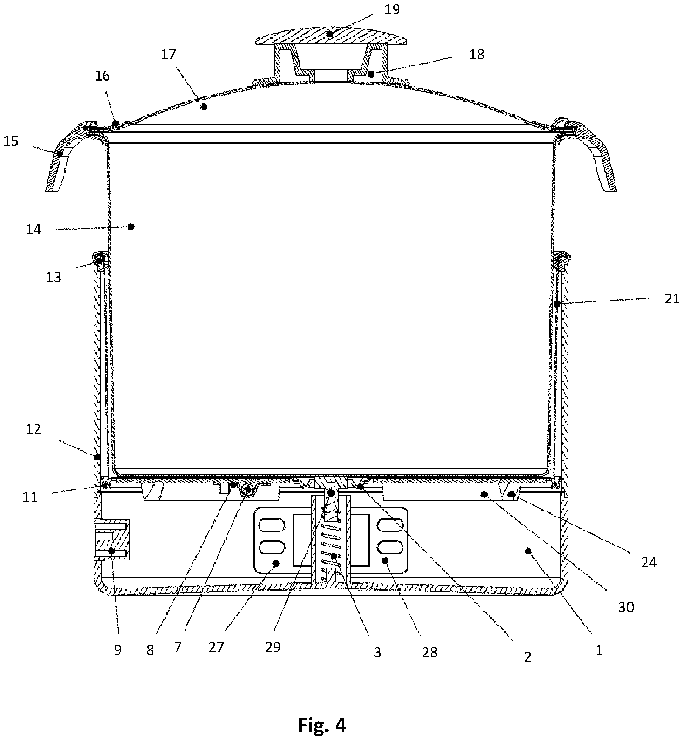

Obviously, it is possible to provide reduced power mode upon termination of the prescribed time for both of the two embodiments of the invention, i.e. with or without an electronic control unit (6). A thermal fuse (7) is conventionally provided in a thermal fuse slot (8). Fig. 3 and Fig. 4 demonstrate a mechanical timer (27) with a power setting switch (28) without an electronic control unit (6) and an NTC element (4) according to the second embodiment of the present invention. An electric cord (25) powers said appliance and an electric connector (10) associated with an electric adaptor (9) connects said motor (20) to said electronic control unit (6) according to the first embodiment of the present invention.

The present invention further features an electrical motor (20) associated with a shaft (22) and a propeller (23). Said propeller (23) serves to the purpose of agitating food items being cooked in the cooking pot part (14).It is worthy of note that not every food being cooked requires regular agitation or requires agitation at all. To this end, the propeller system (20, 22, 23) of the invention is removably arranged to be used optionally.

In a nutshell, the present invention discloses an electrical household appliance comprising a heater base skirt part (1) with a plurality of electrical resistances (24, 30) having different resistance values. Said resistances (24, 30) are separately connectable to electrical power. Said skirt part (1) is integrally formed with a circumferential body extension (12) defining a central space for receiving a cooking pot part (14). Said cooking pot part's (14) base is in thermal communication with said electrical resistances (24, 30). Said heater base skirt part (1) further comprises a temperature sensor (4, 29) also in thermal communication with said base. The electrical resistance (24, 30) having a lower resistance value (30) is energizable to transfer a reduced amount of heat energy to said base upon a certain temperature of said base sensed by said temperature sensor (4, 29). Further, an electrical motor (20) associated with a shaft (22) and a propeller (23) is disposed on a lid (17) of said cooking pot part (14).

## Claims

1. An electrical household appliance comprising a heater base skirt part (1) comprising a plurality of electrical resistances (24, 30) having different resistance values and separately connectable to electrical power, said skirt part (1) integrally formed with a circumferential body extension part (12) defining a central space for receiving a cooking pot part (14), said cooking pot part's (14) base being in thermal communication with said electrical resistances (24, 30) wherein said heater base skirt part (1) further comprises a temperature sensor (4, 29) also in thermal communication with said base and an electrical resistance (24, 30) having a lower resistance value (30) is energizable to transfer a reduced amount of heat energy to said base upon a certain temperature of said base sensed by said temperature sensor (4, 29).

2. An electrical household appliance and in particular an electrical cooking pot as set forth in Claim 1 wherein said temperature sensor (4, 29) is secured in a housing (5) being pressed against the base of said cooking pot part (14) by means of a spring element (3) and is encircled by a sealing element (2).

3. An electrical household appliance and in particular an electrical cooking pot as set forth in Claim 2 wherein said temperature sensor (29) is a bimetal element.

4. An electrical household appliance and in particular an electrical cooking pot as set forth in Claim 2 wherein said temperature sensor (4) is an NTC element.

5. An electrical household appliance and in particular an electrical cooking pot as set forth in Claim 4 wherein said heater base skirt part (1) comprises an electronic control unit (6) powering said lower value resistance (30) upon said NTC element (4) sensing a certain temperature around boiling temperature.

6. An electrical household appliance and in particular an electrical cooking pot as set forth in Claim 5 wherein cooking duration is settable by said electronic control unit (6).

7. An electrical household appliance and in particular an electrical cooking pot as set forth in Claim 1 or 2 wherein said heater base skirt part (1) comprises a mechanical timer (27).

8. An electrical household appliance and in particular an electrical cooking pot as set forth in any previous Claims wherein said cooking pot part (14) is made out of a stainless steel body (21)

9. An electrical household appliance and in particular an electrical cooking pot as set forth in any previous Claims wherein said body extension part (12) is made out of a polymeric material.

10. An electrical household appliance and in particular an electrical cooking pot as set forth in any previous Claims wherein said body extension part (12) has an upper rim with a sealing member (13).

11. An electrical household appliance and in particular an electrical cooking pot as set forth in Claims 1, 4 or 5 wherein an electrical motor (20) associated with a shaft (22) and a propeller (23) is disposed on a lid (17) of said cooking pot part (14).

12. An electrical household appliance and in particular an electrical cooking pot as set forth in Claim 11 wherein said cooking pot part (14) has lid locks (16) for keeping said cooking pot's lid (17) stationary during homogenization process.
